# EUROPEAN PATENT APPLICATION

(11) **EP 4 325 609 A1**
(43) Date of publication of application: **21.02.2024**
(21) Application number: 22190751.2
(22) Date of filing: 17.08.2022
(51) Int. Cl.: H01M 8/248, H01M 8/0271

(54) **FUEL CELL STACK ASSEMBLY AND FUEL CELL DEVICE INCLUDING THE SAME**

(71) Applicant: AVL List GmbH, 8020 Graz (AT); AVL Fuel Cell Canada Inc., Burnaby, British Columbia V5A4N8 (CA)
(72) Inventor: Raibeck, Laura, Burnaby, V5N 4G2 (CA); Thomas, Owen, Vancouver, V6E4V3 (CA); Mann, Paul, Burnaby, V5E 2S2 (CA); Dhadda, Gurpyar, Burnaby, V5A 4N6 (CA)
(74) Representative: Gamper, Bettina

(57) **Abstract**

The present invention relates to a fuel cell stack assembly for the end portions of a fuel cell stack having individual, stacked unit cells. The fuel cell stack assembly comprises an output terminal (20), an electrically conductive bus plate (10), a load distribution plate (60) covering outer side, and an electrically insulating isolator plate (40) arranged between the bus plate (10) and the load distribution plate (60). According to the invention, the output terminal (20) is arranged within planar dimensions of the load distribution plate (60), and reaches to the outside through an opening (40a) in the isolator plate (40) and through an opening (60a) in the load distribution plate (60) in a stacking direction (S) of the fuel cell stack.

## Description

The present application relates to a fuel cell stack assembly for end portions of a fuel cell stack and a corresponding fuel cell device comprising a fuel cell stack including said assembly on both ends of the fuel cell stack.

### Technical field of the invention

The fuel cell stack assembly, according to the invention, is suitable to be integrated in the stack design of a compact fuel cell system; in particular, a compact fuel cell for transportation applications having a proton exchange membrane (PEM-FC), where each of the cells includes a membrane-electrode assembly alternatingly stacked between bipolar plates and accommodating ports and channels for operational fluids for electrochemical reaction in the cells.

### Background of the invention

Transportation applications require a continued development of power density of the onboard power source. Further, in purpose of a power dense compact design, each component and the whole functional fuel cell stack itself shall have as small as possible outer dimensions. Also, in terms of economical manufacturing and assembling, the design of a fuel cell stack strives for stackable parts as identically formed as possible for repeated stacking of so-called unit cells comprising the fuel cell stack.

Several compact fuel cell stack designs exhibit electrical connectors for supplying an output load as well as having other connections for the supply of reactants to fluid channels of the fuel cells, thereby contributing to larger overall dimensions of the fuel cell stack.

In a known stack design, the leads or current collectors of each cell are arranged in plane of the cell reaching to an outside of the cross-section of the fuel cell stack to be connected by a bus bar which is normally aligned in the stacking direction arranged on the outside.

However, when trying to maximize a modular packaging of several fuel cell stacks in a restricted space, i.e. in a respective compartment of a vehicle, it becomes desirable to design fuel cell stacks having a more or less rectangular contour of overall dimensions including all electrical wiring of the fuel cell stack.

### Summary of the Invention

The objectives of the invention described herein are (a) to allow the fuel cell to be designed with reduced outer dimensions to allow for higher volumetric power densities; and, (b) to simultaneously reduce manufacturing and assemby costs.

The invention achieves these objectives by means of design-optimized end-portions of a fuel cell stack where these end-portions are comprised of features identified in Claim 1, all related claims, specifications, and drawings.

According to the invention a fuel cell stack assembly for end portions of a fuel cell stack having stacked individual unit cells, comprises: an output terminal for providing output of electrical power of the fuel cell stack; an electrically conductive bus plate for collecting a current flowing through the cells of the fuel cell stack, arranged in electrical contact between the last individual stacked unit cell and the output terminal; a load distribution plate for covering the isolator plate and protecting the end side of the fuel cell stack; an electrically insulating isolator plate for electrical disconnection, arranged between the bus plate and the load distribution plate; wherein the output terminal is arranged within planar dimensions of the load distribution plate, and reaches to the outside through an opening in the isolator plate and through an opening in the load distribution plate in a stacking direction of the fuel cell stack.

For the purposes of this invention, the fuel cell stack assembly is comprised of three portions: a middle portion - or simply the "fuel cell stack" - and two end-portions - the subject of the invention described herein. Each end-portion of the fuel cell stack assembly is comprised of an output terminal, a bus plate, an isolator plate, a load-distribution plate, an output terminal cap, and other components. The output terminal provides a means of conducting electrical power from the fuel stack to an external consumer. The bus plate provides a means of collecting full current generated by the fuel cell stack and concentrating it into the output terminal. On one side, the bus plate is galvanically bonded and mechanically affixed to the output terminal by means of fasteners, soldering, welding, or a combination of these means; on the opposite side, the bus plate is placed in physical and galvanic contact with an end of the fuel cell stack. The isolator plate is electrically insulating and provides a means of electrical isolation between energized components of the fuel cell stack assembly and those that belong to the touch-safe class - such as the load-distribution plate. The isolator plate is arranged between the bus plate and the load-distribution plate. The output terminal reaches to the outside through an opening in the isolator plate and through an opening in the load-distribution plate in the stacking direction of the fuel cell stack. A feature of this invention is a unique usage of o-ring seals to provide an electrical creepage barrier; such o-rings are placed between the isolator plate and the output terminal cap to extend the creepage path between the output terminal and the load-distribution plate - each of which belong to different electrical class of components.

Hence, for the first time, the invention permits industry-leading volumetric power densities as a result of the fuel cell stack assembly having a purely prismatic, rectangular, and optimally minimalistic outer contour.

Additionally, the reduced outer dimensions of the fuel cell stack assembly, along with the aforementioned other benefits, enable a spatially-dense modular arrangement of fuel cell stack assemblies in multi-stack architectures, as desired in transportation applications.

Yet another advantage of the invention is the simplification of the electrical power connections. Traditionally, electrical power connections are made by way of cumbersome bus bars and load cables. The invention described herein allows the electrical connections to be made using a "plug-and-play" philosophy where the fuel cell stack assembly can be simply inserted or removed as a module and all mechanical, fluid, and electrical connections can be made by one or more simple actions. This advantage is especially important in modular system architectures where quick removal and insertion is necessary.

Another advantage is the use of substantially similar parts that simplify the assembly for the end portions of the fuel cell stack thereby resulting in significant cost reduction through the use of common parts and processes.

The invention has the output terminal arranged in the center of the fuel cell stack and the end plate and terminal cap radially surround it. In this way all parts or components can be assembled on a stack end in any orientation. When the fuel cell stacks are modularly arranged, each output terminal is spaced equidistantly allowing for continual electrical wiring on a vehicle system.

The isolator plate of the invention consists of a protruding insulated sleeve section that reaches through the opening of the end plate and surrounds the outer perimeter of the electrical output terminal. The end-portion assembly further consists of a terminal cap that, together with the novel use of one or more elastic o-rings, provides an effective means of protection against electrical creepage loss. The terminal cap is arranged on the outer perimeter of the output terminal and surrounds the outer perimeter of the sleeve section on the isolator plate. The isolator plate, along with the o-ring and the terminal cap, provides electrical insulation between the energized components and the touch-safe components of the fuel cell stack. The o-ring is compressed between the outer surface of the isolator plate sleeve section and the inner surface of the terminal cap sleeve section, thereby suppressing potential isolation breaches caused by surface wetting.

More specific to this aspect of the invention, the terminal cap has a flat collar section that extends radially away from the output terminal to increase the electrical creepage distance and provide more operational safety of the fuel cell by guarding against potential short-circuiting between the output terminal and the end plate.

In another aspect of the invention, the assembly further comprises a resilient circlip for retaining the terminal cap to the output terminal - the circlip being arranged in a spring-loaded, clamped engagement with the inner perimeter of the terminal cap and the outer perimeter of the output terminal. In this arrangement, the circlip, along with the inner bolts on the bus plate, secures the fuel cell end assembly.

In the design, the load distribution plate comprises of means to receive compression by the use of fasteners on both ends of the fuel cell stack that compress the stacked cells. This feature is another mechanical functionality of the load distribution plate in addition to its functionality of covering and protecting the outer components of the fuel cell stack.

A further advantageous feature, the compression reception means make use of through-holes for insertion of bolts aligned in the stacking direction. The through-holes are strategically positioned around the planar dimensions of the end plate. This assembly enables effective and precise compression of the stacked cells with minimal assembly effort and manufacturing costs.

As a feature of the invention, the load distribution plates, the bus plates, the isolator plates, the output terminals and terminal caps on both ends of the fuel cell stack have substantially similar shapes and features for better assembly. This aspect provides a significant advantage for assembly and cost reduction in part manufacturing.

Further objectives, advantages, features, and applications of the present invention are outlined in the following descriptions with reference to the figures:
- Fig. 1: is an exploded assembly drawing showing both ends with the relevant disassembled components of a fuel cell stack assembly;
- Fig. 2: is a perpendicular cross section showing one end of the assembled fuel cell components; and
- Fig. 3: shows an angled cross-section of the assembled components of the fuel cell stack assembly as presented in Fig. 1.

### Detailed description of the Invention

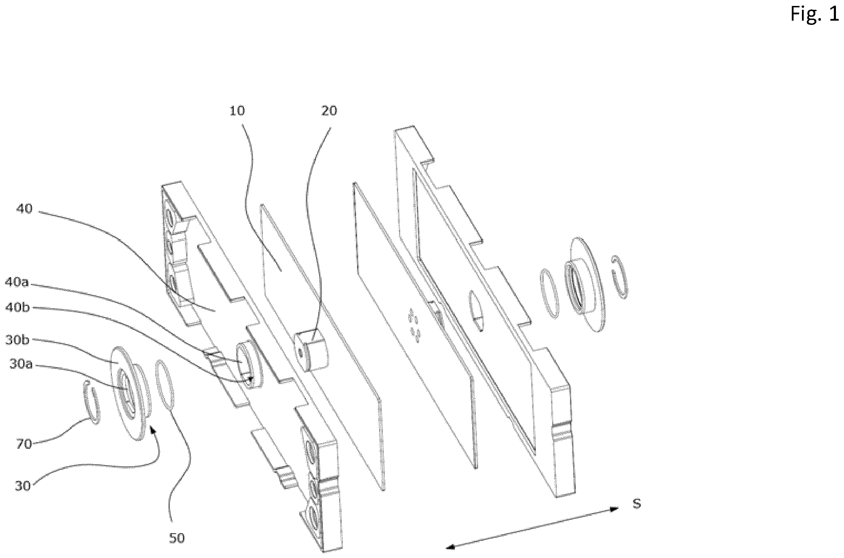

Fig. 1 shows relevant components of the fuel cell assembly in an exploded view. The individual unit cells that are to be stacked and arranged in the middle of the fuel cell stack are not depicted for a simplified and focussed representation. The fuel cell stack assembly arranged from end to end comprises from inside to outside: a bus plate 10, the output terminal 20, an isolator plate 40, a load distribution plate (not depicted in Fig. 1), and the terminal cap 30 as the main components. In addition, each assembly includes an elastic o-ring 50 and a retaining circlip 70. The bus plate 10 has a flat inner side to provide a large surface area for electrical contact with the outermost unit cell stacked in series with all the other individual cells. The bus plate 10 also has the output terminal 20 attached on its outer side - a distinct feature of the invention that also provides orientation for the assembly of the other parts.

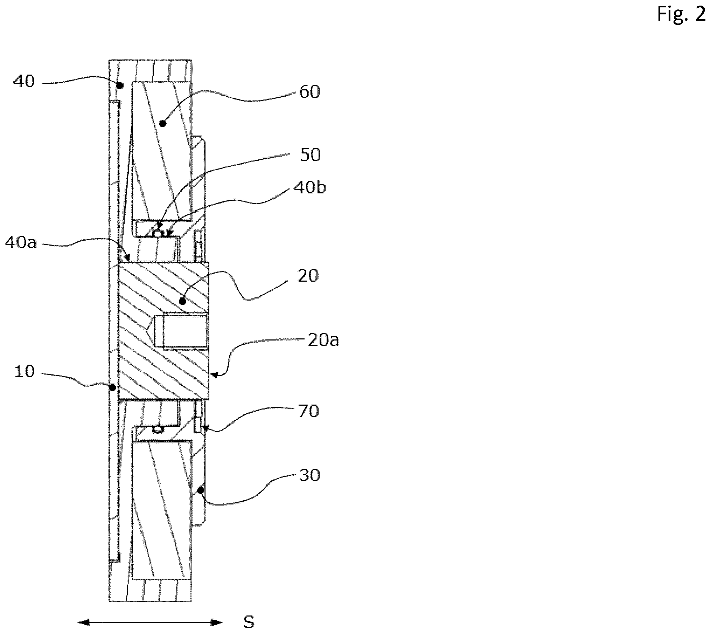

Fig. 2 shows the assembled and engaged state of all the components of the fuel cell stack assembly on one end. The output terminal 20 is a bolt-like shaped element made up of the same electrically conductive material as the bus plate 10.The output terminal 20 protrudes normal to the plane of the bus plate 10, wherein both parts are integrally joined together to build up a connected component with electrical conductivity in the junction between both parts.

As seen in comparison between Fig. 1 and Fig. 2, the isolator plate 40 is stacked upon the outer side of the bus plate 10 to cover and electrically insulate the current-carrying bus plate 10 from the next outer component, the load distribution plate 60. The load distribution plate 60 provides an outer surface for the fuel stack and, alternatively, covers as well as protects the end of the fuel cell stack in the stacking direction S. The output terminal 20 is centrally arranged with respect to the load distribution plate 60. The output terminal 20 reaches from the bus plate 10 through an opening 40a in the isolator plate 40 and a congruently positioned opening 60a in the load distribution plate 60 to provide a connection to supply power to an external load like e.g. a traction motor of an electrically propelled vehicle. The output terminal 20 comprises of a threaded central bore through its outer face for fastening a major lead wire or bus bar that connects to an external load.

In the cut-out where the output terminal 20 reaches through both the isolator plate 40 and the load distribution plate 60 in the stacking direction S, the fuel cell stack assembly includes two elements to ensure electrical insulation properties between the output terminal 20 and the load distribution plate 60: the o-ring 50 and the terminal cap 30.

On the outer side, the isolator plate 40 has a sleeve section 40b integrally formed around the opening 40a protruding to the outside. The sleeve section 40b is made of the same electrical insulating material as the isolator plate 40 which is e.g. a rubber or resin based material. The sleeve section 40b surrounds the output terminal 20 for at least the thickness of the load distribution plate 60. An elastic o-ring 50 is spanned around the sleeve section 40b to tighten the sleeve section 40b onto the inner perimeter of the terminal cap 30. In this way, enhanced sealing is provided against potential leakage of operational fluids from the outside of the fuel cell stack. The same protection principle applies to potential electrical creepage that could be caused by a fluid leakage or otherwise.

Also on the outer side, the isolating terminal cap 30 which is a hollow ring-like or rotationally symmetrical part that also surrounds the output terminal 20 through the thickness of the load distribution plate 60 and beyond. The terminal cap 30 has an integrally formed collar section 30b. The collar section 30b is made up of the same electrically insulating material as the terminal cap 30 which is e.g. the same or a similar material as the isolator plate 40. The collar section 30b covers and insulates or protects an area of the outer face of the load distribution plate 60 surrounding the output terminal 20. This design protects against a possible short circuiting of the energized components from being in contact with the load distribution plate 60, e.g. during any manipulations for electrically connecting the fuel cell stack during assembly or in operation of a respective system integration or host vehicle. A circlip 70 is fixed between the terminal cap 30 and the output terminal 20 to secure the terminal cap 30. The circlip 70 sits in a circular groove recessed in the outer perimeter of the output terminal 20 and provides a spring-loaded, axial locking to the terminal cap's outer face.

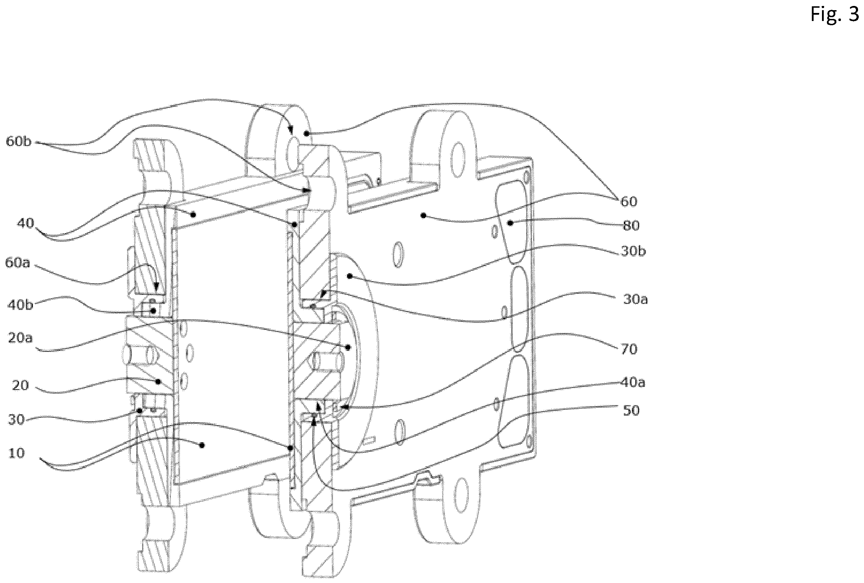

Fig. 3 shows the outermost components of both sides of the fuel cell assembly including from the inside to the outside: the bus plate 10, the isolator plate 40, the load distribution plate 60, the terminal cap 30 and, in the centre, the output terminal 20. The bolts are received in through-holes 60b located the outer periphery of the load distribution plate 60. The bolts are inserted into the through-holes 60b of the load distribution plates 60 on both sides of the fuel cell stack and are tightened nuts that apply an external compression force on the stack that compresses and seals the stacked individual unit cells against leakage, as well as ensuring electrical surface contact between the cells, and providing structural integrity to the fuel cell stack. As can be seen in Fig 3, the load distribution plates 60 and the isolator plate 40 also comprise of three congruently positioned fluid ports 80 on both shorter sides of the stack for the delivery and return of oxidant fluid, fuel fluid, and coolant fluid that then branch off to each of the stacked cells.

### List of reference characters

- 10: bus plate
- 20: output terminal
- 30: terminal cap
- 30a: terminal cap sleeve section
- 30b: terminal cap collar section
- 40: isolator plate
- 40a: isolator plate opening
- 40b: isolator plate sleeve section
- 50: o-ring
- 60: load distribution plate
- 60a: load distribution plate opening
- 60b: through-holes on load distribution plate
- 70: circlip
- 80: fluid ports

- S: stacking direction

## Claims

1. A fuel cell stack assembly having stacked individual unit cells, comprising of:
an output terminal (20) for providing output of electrical power of the fuel cell stack;
an electrically conductive bus plate (10) for collecting a current flowing through the cells of the fuel cell stack, arranged in electrical contact between the last individual stacked unit cell and the output terminal (20);
a load distribution plate (60) for covering the isolator plate (40) and protecting the end side of the fuel cell stack;
an electrically insulating isolator plate (40) for electrical disconnection, arranged between the bus plate (20) and the load distribution plate (60); wherein
the output terminal (20) is arranged within planar dimensions of the load distribution plate (60), and reaches to the outside through an opening (40a) in the isolator plate (40) and through an opening (60a) in the load distribution plate (60) in a stacking direction (S) of the fuel cell stack.

2. The fuel cell stack assembly according to the preceding claim, wherein the output terminal (20) is arranged in the centre of the planar dimensions of the load distribution plate (60) and/or the centre of the outer dimensions of the end side of the fuel cell stack covered by the load distribution plate (60).

3. The fuel cell stack assembly according to any of the preceding claims, wherein the isolator plate (40) comprises a protruding sleeve section (40b) for insulative protection of an outer perimeter of the output terminal (20) reaching through the opening (60a) in the load distribution plate (60), wherein the isolator plate sleeve section (40b) protrudes from the isolator plate (40) through the opening in the load distribution plate (60a) towards the outer side of the load distribution plate (60).

4. The fuel cell stack assembly according to claim 3, further comprises an elastic O-ring (50) for protection against electrical creepage, wherein the O-ring (50) is arranged to go around the outer perimeter of the sleeve section (40b) of the isolator plate (40).

5. The fuel cell stack assembly according to any of the preceding claims, further comprises an isolating terminal cap (30) for insulative protection of the outer end of the output terminal (20), wherein the terminal cap (30) is arranged between the outer perimeter of the output terminal (20) and/or the outer perimeter of the sleeve section (40b) of the isolator plate (40) and an inner perimeter of the opening (60a) in the load distribution plate (60).

6. The fuel cell stack assembly according to claim 5, wherein the isolating terminal cap (30) comprises on one axial end a flat shaped collar section (30b) for electrical insulative protection of the surrounding outer face of the load distribution plate (60) from potential connection and/or short circuiting to the output terminal (20), wherein the collar section (30b) has an extended outer perimeter arranged axially on the outer face of the load distribution plate (60).

7. The fuel cell stack assembly according to claim 5 or 6, further comprises a circlip (70) for retaining the isolating terminal cap (30) onto the output terminal (20). The circlip (70) being arranged in a spring-loaded clamped engagement with the inner perimeter of the terminal cap (30) and/or the collar section (30b) and the outer perimeter of the output terminal (20).

8. The fuel cell stack assembly according to any of the preceding claims, wherein the load distribution plate (60) comprises of through-holes (60b) on the load distribution plate (60) for receiving a compression force applied between both ends of the fuel cell stack for compressing the stacked cells.

9. The fuel cell stack assembly according to claim 8, wherein the through-holes (60b) allow for insertion of bolts aligned in the stacking direction (S), the through-holes (60b) being strategically positioned in the peripheral section around the planar dimensions of the load distribution plate (60).

10. A fuel cell device comprising of a fuel cell stack which includes on both ends of the fuel cell stack a complete fuel cell stack end assembly according to any of the preceding claims.

11. The fuel cell device according to claim 10, wherein the load distribution plates (60) on both ends of the fuel cell stack have a substantially similar shape configured for easy use of the same parts.

12. The fuel cell device according to any of the claims 10 to 11, wherein the bus plates (10) on both ends of the fuel cell stack have a substantially similar shape configured for easy use of the same parts.

13. The fuel cell device according to any of the claims 10 to 12, wherein the isolator plates (40) on both ends of the fuel cell stack have a substantially similar shape configured for easy use of the same parts.

14. The fuel cell device according to any of claims 10 to 13, wherein the output terminals (20) on both ends of the fuel cell stack have a substantially similar shape configured for easy use of the same parts.

15. The fuel cell device according to any of claims 10 to 14, wherein the insulating terminal cap (30) on both ends of the fuel cell stack have a substantially similar shape configured for easy use of the same parts.
